# EUROPEAN PATENT APPLICATION

(11) **EP 4 428 954 A1**
(43) Date of publication of application: **11.09.2024**
(21) Application number: 23793220.7
(22) Date of filing: 22.08.2023
(51) Int. Cl.: H01M 4/525, H01M 4/131, H01M 10/0525

(54) **HIGH-NICKEL TERNARY POSITIVE ELECTRODE MATERIAL, PREPARATION METHOD, POSITIVE ELECTRODE SHEET, SECONDARY BATTERY AND USE**

(30) Priority: 17.01.2023 CN 202310059173
(71) Applicant: Tianjin B&M Science And Technology Co., Ltd., Tianjin 300384 (CN)
(72) Inventor: CHEN, Penghui, Binhai New Area Tianjin 300384 (CN); YU, Limei, Binhai New Area Tianjin 300384 (CN); LV, Fei, Binhai New Area Tianjin 300384 (CN); XU, Ning, Binhai New Area Tianjin 300384 (CN)
(74) Representative: Meroni, Francesca
(86) International application number: PCT/CN2023/114163
(87) International publication number: WO 2024/152563

(57) **Abstract**

The present application relates to a high-nickel ternary cathode material, a preparation method, a positive plate, a secondary battery, and an application, and pertains to the field of lithium ion secondary battery technology. The high-nickel ternary cathode material includes a material with a chemical formula of LiNiₓCo_{y}Mn_{z}XₐY_{b}O₂, wherein 0.8≤x<0.96, y>0, z>0, 0.001≤a≤0.05, 0.001≤b≤0.05, x+y+z+a=1, X and Y are doping elements, X includes one or more of Al and In, and Y includes one or more of B and Si. By doping the element X and the element Y, cycle performance and thermal stability of the high-nickel ternary cathode material can be improved.

## Description

### Cross-reference to Related Applications

The present application claims priority to Chinese Patent Application No. 202310059173.X, entitled "High-nickel Ternary Cathode Material, Preparation Method, Positive Plate, Secondary Battery, and Application", filed with China National Intellectual Property Administration on January 17, 2023, the entire content of which is incorporated herein by reference.

### Technical Field

The present application relates to the field of lithium ion secondary battery technology, and particularly to a high-nickel ternary cathode material, a preparation method, a positive plate, a secondary battery, and an application.

### Background Art

In order to achieve carbon neutrality, accelerated transition from fossil fuels to sustainable energy sources changes our society and accelerates research progress of efficient energy conversion and storage systems. As a high-performance electrochemical energy storage apparatus, rechargeable lithium ion batteries (LIBs) are increasingly widely used in the fields of consumer electronics, automobile industry, power grid energy storage, or the like, and become one of solutions for realizing efficient energy conversion and storage. Since a cathode material is dominant in weight and cost of the LIBs, a development of the cathode material with an excellent comprehensive performance, such as a high capacity, a long cycle life, a high power, a high safety, or the like, is of great significance for a development of a new-generation LIBs.

In various cathode material systems, a high-nickel ternary cathode material LiNiₓCo_{y}Mn_{1-x-y}O₂ (x≥0.8, and x+y<1) with a layered structure has advantages of a higher reversible specific capacity (more than 200mAhg⁻¹), a higher working voltage (3.8V vs. Li/Li⁺), or the like, and is successfully used, as a high-energy electrode material, in an electric automobile with a single-charge traveling distance of more than 500 kilometers. Although an increase in a nickel content in the traditional high-nickel ternary cathode material can significantly increase the capacity, the high-nickel ternary cathode material still has a problem of gradual deterioration of a cycle performance and thermal stability.

### Summary

Based on the above, it is necessary to provide a high-nickel ternary cathode material, a preparation method, a positive plate, a secondary battery and an application, so as to improve cycle performance and thermal stability of the high-nickel ternary cathode material.

A first aspect of the present application provides a high-nickel ternary cathode material, which includes a material with a chemical formula of LiNiₓCo_{y}Mn_{z}XₐY_{b}O₂, wherein 0.8≤x<0.96, y>0, z>0, 0.001≤a≤0.05, 0.001≤b≤0.05, x+y+z+a=1, X and Y are doping elements, X includes one or more of Al and In, and Y includes one or more of B and Si.

In some embodiments, the doping element X is distributed in bulk lattice of the material with the chemical formula of LiNiₓCo_{y}Mn_{z}XₐY_{b}O₂, and the doping element Y is enriched at a surface of the material with the chemical formula of LiNiₓCo_{y}Mn_{z}XₐY_{b}O₂.

In some embodiments, a specific surface area of the high-nickel ternary cathode material is 0.4m²/g-0.7m²/g.

In some embodiments, a mass percent content of Li₂CO₃ in the high-nickel ternary cathode material is 0.05wt% to 0.15wt%.

In some embodiments, a mass percent content of LiOH in the high-nickel ternary cathode material is 0.30wt% to 0.40wt%.

A second aspect of the present application provides a preparation method for the high-nickel ternary cathode material according to the first aspect of the present application, including steps of:
mixing an additive, a lithium source, and a precursor containing a nickel element, a cobalt element, and a manganese element, so as to obtain a mixed material, wherein the additive contains a doping element X and a doping element Y; and
performing a sintering process on the mixed material.

In some embodiments, the precursor containing the nickel element, the cobalt element, and the manganese element includes a material with a chemical formula of NiₘCoₙMn₁₋ₘ₋ₙ(OH)₂, 0.8≤m<0.96, n>0, and m+n<1 ;
optionally, the additive includes one or more of oxide, carbonate, hydroxide, and acetate of the doping element X and the doping element Y; and
optionally, the lithium source includes one or more of lithium hydroxide, lithium carbonate, lithium acetate, and lithium nitrate.

In some embodiments, a lithium element in the lithium source and the precursor containing the nickel element, the cobalt element, and the manganese element have a molar ratio of (1.01-1.06):1.

In some embodiments, an amount of substance of the doping element X is 0.1% to 0.6% of a total amount of substance of the additive, the lithium source, and the precursor containing the nickel element, the cobalt element, and the manganese element in the mixed material; and
an amount of substance of the doping element Y is 0.4% to 1% of the total amount of substance of the additive, the lithium source, and the precursor containing the nickel element, the cobalt element, and the manganese element in the mixed material.

In some embodiments, the sintering process includes the steps of: placing the mixed material in an oxygen-containing sintering atmosphere, and sintering for 2h to 10h at 450°C to 600°C, and then sintering for 10h to 20h at 650°C to 900°C; and
optionally, volume percentage of oxygen in the oxygen-containing sintering atmosphere is greater than or equal to 97%.

A third aspect of the present application provides a positive plate, including the high-nickel ternary cathode material according to the first aspect of the present application or the high-nickel ternary cathode material prepared by the preparation method according to the second aspect of the present application.

A fourth aspect of the present application provides a secondary battery, including the positive plate according to the third aspect of the present application.

A fifth aspect of the present application provides an electric device, including the secondary battery according to the fourth aspect of the present application.

Compared with a prior art, the high-nickel ternary cathode material, the preparation method, the positive plate, the secondary battery, and the application at least have the following advantages:
(1) the element X and the element Y doped in the high-nickel ternary cathode material can inhibit surface reconstruction in a cycle process of the cathode material while improving an ion interaction force and bond energy thereof, and can take account of double functions of doping and surface coating, thereby synergistically improving crystal structure stability and surface chemical stability of the high-nickel ternary cathode material, so as to improve cycle performance and thermal stability thereof.
(2) A competitive doping strategy of doping the element X and the element Y at the same time is adopted in the high-nickel ternary cathode material, such that X element substitution and lattice gap filling can be realized without reducing the specific capacity thereof, thus avoiding a lattice distortion and an obstruction to bulk diffusion caused by doping of the element Y with a smaller ionic radius to a gap position.

### Brief Description of Drawings

FIG. 1 is an SEM image of a high-nickel ternary cathode material prepared in example 1 of the present application.
FIG. 2 is an SEM image of a high-nickel ternary cathode material prepared in comparative example 1 of the present application.
FIG. 3 is an XRD graph of the high-nickel ternary cathode material prepared in example 1 of the present application.
FIG. 4 is a comparison diagram of cycle performance of the high-nickel ternary cathode materials prepared in example 1 and comparative example 1 of the present application.

### Detailed Description

In order to make the aforementioned objects, features and advantages of the present application more apparent, the embodiments of the present application are described below in detail. In the following description, numerous specific details are set forth, so as to provide a thorough understanding of the present application. However, the present application may be implemented in many ways different from those described herein, those skilled in the art may make similar improvements without departing from the essence of the present application, and therefore, the present application is not limited to the examples disclosed below.

In the description of the present application, unless otherwise defined, terms of art and words of art which are not explicitly described have the same meaning as commonly understood by those skilled in the art and are common general knowledge of those skilled in the art, and methods which are not explicitly described are all conventional methods well known to those skilled in the art. The term "a plurality of" in the present application means at least two, for example, two, three, or the like, unless explicitly defined otherwise.

In the present application, the technical features described in an open type include a closed technical solution consisting of the listed features, and also include an open technical solution including the listed features.

An embodiment of the present application provides a high-nickel ternary cathode material, which includes a material with a chemical formula of LiNiₓCo_{y}Mn_{z}XₐY_{b}O₂, wherein 0.8≤x<0.96, y>0, z>0, 0.001≤a≤0.05, 0.001≤b≤0.05, x+y+z+a=1, X and Y are doping elements, X includes one or more of Al and In, and Y includes one or more of B and Si.

In the high-nickel ternary cathode material according to the present application, the element X and the element Y are co-doped in a bulk of the high-nickel ternary cathode material (i.e., an undoped high-nickel ternary cathode material), and competitive doping is formed using differences between different coordination space configurations and migration barriers of the two elements X and Y, such that element X substitution, lattice gap filling, and element Y enrichment on a surface of the bulk can be realized in one step, thereby inhibiting surface reconstruction in a cycle process of the high-nickel ternary cathode material while improving an ion interaction force and bond energy of the high-nickel ternary cathode material, with double functions of doping and surface coating being taken account, and further synergistically improving crystal structure stability and surface chemical stability of the high-nickel ternary cathode material, so as to improve cycle performance and thermal stability thereof, and solve problems of capacity attenuation, or the like, caused by lattice collapse, surface reconstruction, or the like, in the cycle process of the traditional high-nickel ternary cathode material.

Although the stability of the high-nickel ternary cathode material can be improved to a certain extent in traditional element doping technologies, lithium insertion sites in bulk lattice is occupied while a bulk lattice structure of the high-nickel ternary cathode material is stabilized, such that part of the specific capacity of the high-nickel ternary cathode material is sacrificed.

The competitive doping strategy in the present application can realize element X substitution and lattice gap filling without reducing a proportion of a nickel element in the high-nickel ternary cathode material, i.e., the specific capacity thereof, thus avoiding a lattice distortion and an obstruction to bulk diffusion caused by doping of the element Y with a smaller ionic radius to a gap position. Meanwhile, since a price of the nickel element is much lower than that of a cobalt element, the nickel element in the high-nickel ternary cathode material has a high proportion, and transition metal elements, such as the cobalt element, or the like, have low proportions, an advantage of a low cost of the raw material is taken into account. It may be appreciated that x may be, for example, 0.8, 0.82, 0.85, 0.87, 0.9, 0.92, 0.95, or the like, a may be, for example, 0.001, 0.003, 0.005, 0.008, 0.01, 0.02, 0.03, 0.04, 0.05, or the like, and b may be, for example, 0.001, 0.003, 0.005, 0.008, 0.01, 0.02, 0.03, 0.04, 0.05, or the like.

In some embodiments, the doping element X is distributed in bulk lattice of the material with the chemical formula of LiNiₓCo_{y}Mn_{z}XₐY_{b}O₂, and the doping element Y is enriched at a surface of the material with the chemical formula of LiNiₓCo_{y}Mn_{z}XₐY_{b}O₂.

It should be noted that the doping site and a doping depth of the element can significantly affect an overall performance of the high-nickel ternary cathode material, and therefore, a doping type, the doping site and the doping depth of the element are critical to an improvement of the performance of the high-nickel ternary cathode material. In the present application, since X and Y have obviously different extranuclear electron arrangements and ionic radii, different coordination space configurations can be formed, and different diffusion energy barriers are shown in the doping process, the doping elements are selected to be X and Y. A migration barrier of the element Y in a bulk crystal structure is higher than that of the element X, and diffusion kinetics is slow, such that during co-doping of the element X and the element Y, the migration barrier of the element Y is significantly increased, the element Y tends to aggregate on the surface of the material with the chemical formula of LiNiₓCo_{y}Mn_{z}XₐY_{b}O₂, and the element X is more prone to enter a transition metal layer of the material with the chemical formula of LiNiₓCo_{y}Mn_{z}XₐY_{b}O₂. Specifically, X includes one or more of Al and In, Y includes one or more of B and Si, 3s and 3p orbits of the element X can be hybridized with a d orbit into an sp³d² hybridized orbit which can be bonded to lattice oxygen to form an XOe octahedron, where X³⁺ has an ionic radius that is close to a radius of a transition metal cation in the high-nickel ternary cathode material, and has a smaller diffusion barrier, therefore, it is more easily doped into the transition metal layer of the bulk lattice of the material with the chemical formula of LiNiₓCo_{y}Mn_{z}XₐY_{b}O₂. Thus, the two elements X, Y are differently distributed in the material with the chemical formula of LiNiₓCo_{y}Mn_{z}XₐY_{b}O₂, such that they can inhibit surface reconstruction in the cycle process of the high-nickel ternary cathode material while improving the ion interaction force and the bond energy of the high-nickel ternary cathode material, with the double functions of doping and surface coating being taken account, thereby synergistically improving the crystal structure stability and the surface chemical stability of the high-nickel ternary cathode material, so as to improve the cycle performance and the thermal stability thereof.

In some embodiments, 0<y<0.198, and 0<z<0.198. It may be understood that y may include, but is not limited to, 0.001, 0.002, 0.005, 0.007, 0.009, 0.01, 0.03, 0.05, 0.08, 0.101, 0.132, 0.156, 0.173, 0.197, or the like; z may include, but is not limited to, 0.001, 0.003, 0.005, 0.007, 0.009, 0.01, 0.03, 0.05, 0.07, 0.112, 0.135, 0.159, 0.175, 0.197, or the like.

In some preferred embodiments, z>y. It should be noted that when z>y, the cobalt element content in the high-nickel ternary cathode material is low, the high-nickel ternary cathode material is a high-nickel low-cobalt ternary cathode material, the high-nickel low-cobalt ternary cathode material has an advantage of a low cost, and the cycle performance, the thermal stability, or the like, of the high-nickel low-cobalt ternary cathode material are improved more significantly.

In some embodiments, the high-nickel ternary cathode material has a specific surface area of 0.4m²/g to 0.7m²/g. It may be understood that the specific surface area of the high-nickel ternary cathode material includes, but is not limited to, 0.4m²/g, 0.45m²/g, 0.5m²/g, 0.55m²/g, 0.6m²/g, 0.65m²/g, 0.7m²/g, or the like.

In some embodiments, Li₂CO₃ in the high-nickel ternary cathode material has a mass percent content of 0.05wt% to 0.15wt%. It may be understood that the mass percent content of Li₂CO₃ in the high-nickel ternary cathode material may be, for example, 0.05wt%, 0.06wt%, 0.07wt%, 0.08wt%, 0.09wt%, 0.1wt%, 0.11wt%, 0.12wt%, 0.13wt%, 0.14wt%, 0.15wt%, or the like.

In some embodiments, LiOH in the high-nickel ternary cathode material has a mass percent content of 0.30wt% to 0.40wt%. It may be understood that the mass percent content of LiOH in the high-nickel ternary cathode material may be, for example, 0.3wt%, 0.31wt%, 0.32wt%, 0.33wt%, 0.34wt%, 0.35wt%, 0.36wt%, 0.37wt%, 0.38wt%, 0.39wt%, 0.4wt%, or the like.

Another embodiment of the present application provides a preparation method for the above high-nickel ternary cathode material, including the steps of:
mixing an additive, a lithium source and a precursor containing a nickel element, a cobalt element and a manganese element to obtain a mixed material, wherein the additive contains a doping element X and a doping element Y; and
sintering the mixed material.

In the sintering process, since the doping elements X, Y have obviously different extranuclear electron arrangements and ionic radii, they can form different coordination space configurations, and show different diffusion energy barriers in the doping process. A migration barrier of the element Y in a bulk crystal structure is higher than that of the element X, and diffusion kinetics is slow, such that during co-doping of the element X and the element Y, the migration barrier of the element Y is significantly increased, the element Y tends to aggregate on the surface of the material with the chemical formula of LiNiₓCo_{y}Mn_{z}XₐY_{b}O₂, and the element X is more prone to enter a transition metal layer of the material with the chemical formula of LiNiₓCo_{y}Mn_{z}XₐY_{b}O₂. With the competitive doping, layered co-doping effects of X bulk uniform doping and Y surface enrichment can be achieved in one step, thereby synergistically improving crystal structure stability and surface chemical stability of the high-nickel ternary cathode material, further improving cycle performance and thermal stability thereof, and solving problems of capacity attenuation, or the like, caused by lattice collapse, surface reconstruction, or the like, in the cycle process of the traditional high-nickel ternary cathode material.

Furthermore, the competitive doping strategy can realize element X substitution and lattice gap filling without reducing a proportion of a nickel element in the high-nickel ternary cathode material, i.e., the specific capacity thereof, thus avoiding a lattice distortion and an obstruction to bulk diffusion caused by doping of the element Y with a smaller ionic radius to a gap position. Meanwhile, a price of the nickel element is much lower than that of a cobalt element, the nickel element in the high-nickel ternary cathode material has a high proportion, and transition metal elements, such as the cobalt element, or the like, have low proportions, such that an advantage of a low cost of the raw material is taken into account. Specifically, in the present application, the doping element X is distributed in bulk lattice of the material with the chemical formula of LiNiₓCo_{y}Mn_{z}XₐY_{b}O₂, and the doping element Y is distributed at a surface of the material with the chemical formula of LiNiₓCo_{y}Mn_{z}XₐY_{b}O₂.

Further, the preparation method is simple and convenient and has a low cost, and the high-nickel ternary cathode material can be prepared with one sintering step, so that the preparation method according to the present application has more advantages in technology and cost compared with a traditional dual-sintering technology or three-time-sintering technology.

In some embodiments, the precursor containing the nickel element, the cobalt element, and the manganese element includes a material with a chemical formula of NiₘCoₙMn₁₋ₘ₋ₙ(OH)₂, where 0.8≤m<0.96, n>0, and m+n<1. It may be understood that m may be 0.8, 0.82, 0.84, 0.86, 0.88, 0.9, 0.92, 0.94, or the like, and n may be, for example, 0.04, 0.05, 0.08, 0.1, 0.12, 0.15, 0.18, or the like.

In some embodiments, the additive includes one or more of oxide, carbonate, hydroxide, and acetate of the doping element X and the doping element Y. It should be noted that the additive contains not only the doping element X but also the doping element Y; the additive may include, but is not limited to, one or any combination of a compound containing both the doping element X and the doping element Y, a compound containing the doping element X but not containing the doping element Y, and a compound containing the doping element Y but not containing the doping element X, where the compound may be oxide, carbonate, hydroxide, and acetate, but is not limited thereto. For example, the additive may include oxide containing the doping element X and oxide containing the doping element Y, or include oxide containing the doping element X and hydroxide containing the doping element Y, or include carbonate containing both the doping elements X and Y, or the like.

In some embodiments, the lithium source includes one or more of lithium hydroxide, lithium carbonate, lithium acetate, and lithium nitrate.

In some embodiments, a lithium element in the lithium source and the precursor containing the nickel element, the cobalt element, and the manganese element have a molar ratio of (1.01-1.06):1. It may be understood that the lithium element in the lithium source and the precursor containing the nickel element, the cobalt element, and the manganese element may, for example, have a molar ratio of 1.01:1, 1.02:1, 1.04:1, 1.06:1, or the like.

In some embodiments, an amount of substance of the doping element X is 0.1% to 0.6% of a total amount of substance of the additive, the lithium source and the precursor containing the nickel element, the cobalt element and the manganese element in the mixed material; and
an amount of substance of the doping element Y is 0.4% to 1% of the total amount of substance of the additive, the lithium source, and the precursor containing the nickel element, the cobalt element, and the manganese element in the mixed material.

It should be noted that a doping type, the doping quantity, a doping site, and a doping depth of the element are critical to an improvement of a performance of the high-nickel ternary cathode material. In the present application, cycle stability and the thermal stability of the high-nickel ternary cathode material can be further improved by controlling quantity percentages of the doping element X and the doping element Y in the mixed material. It may be appreciated that the amount of substance percentage of the doping element X in the mixed material may be, for example, 0.2%, 0.3%, 0.4%, 0.5%, 0.6%, or the like, and the amount of substance percentage of the doping element Y in the mixed material may be, for example, 0.4%, 0.6%, 0.8%, 1%, or the like. For example, when the mixed material is obtained by mixing 0.005mol of Al₂O₃, 0.005mol of B₂O₃, 1.04mol of LiOH-H₂O, and 1mol of N_{10.83}Co_{0.06}Mn_{0.11}(OH)₂, the amount of substance of the doping element Al is 0.488% of the total amount of substance of Al₂O₃, B₂O₃, LiOH-H₂O, and Ni_{0.83}Co_{0.06}Mn_{0.11}(OH)₂, and the amount of substance of the doping element B is 0.488% of the total amount of substance of Al₂O₃, B₂O₃, LiOH·H₂O, and Ni_{0.83}Co_{0.06}Mn_{0.11}(OH)₂.

In some embodiments, the additive, the lithium source, and the precursor containing the nickel element, the cobalt element, and the manganese element are mixed using a dry airflow method, where a rotation speed of an airflow mixer is 500rpm/min to 1,000rpm/min, and a mixing time is 20min to 60min. Mixing by the dry airflow method can fully and uniformly mix the additive, the lithium source, and the precursor containing the nickel element, the cobalt element, and the manganese element, thereby facilitating subsequent sintering. It may be appreciated that the rotation speed of the airflow mixer may be, for example, 500rpm/min, 600rpm/min, 700rpm/min, 800rpm/min, 900rpm/min, 1,000rpm/min, or the like, and the mixing time may be, for example, 20min, 30min, 40min, 50min, 60min, or the like.

In some embodiments, the sintering process includes steps of: placing the mixed material in an oxygen-containing sintering atmosphere, sintering for 2h to 10h at 450°C to 600°C, and then sintering for 10h to 20h at 650°C to 900°C. It should be noted that the doping site and the doping depth of the element are critical to the improvement of the performance of the high-nickel ternary cathode material; in the present application, the doping sites and the doping depths of the element X and the element Y can be controlled by controlling technological conditions of sintering, thereby further improving the cycle stability and the thermal stability of the high-nickel ternary cathode material. It can be understood that the sintering temperature of 450°C to 600°C may be, for example, 450°C, 500°C, 550°C, 600°C, or the like, and the sintering duration of 2h to 10 h may be, for example, 2h, 4h, 6h, 8h, 10h, or the like. The sintering temperature of 650°C to 900°C may be, for example, 650°C, 700°C, 750°C, 800°C, 850°C, 900°C, or the like. Specifically, sintering is carried out in an experimental furnace, and after sintering is finished, the obtained high-nickel ternary cathode material is naturally cooled, the experimental furnace is still kept in a sealed state in the period, and after a furnace temperature of the experimental furnace is reduced to below 50°C, the high-nickel ternary cathode material is taken out. More specifically, the obtained high-nickel ternary cathode material can be crushed and sieved for use, and a sieving mesh number can be 200 to 400.

In some embodiments, volume percentage of oxygen in the oxygen-containing sintering atmosphere is greater than or equal to 97%. It may be understood that the volume percentage of the oxygen in the oxygen-containing sintering atmosphere may be, for example, 97%, 97.5%, 98%, 98.5%, 99%, or the like.

Another embodiment of the present application further provides a positive plate, including the above high-nickel ternary cathode material or the high-nickel ternary cathode material prepared by the above preparation method. The positive plate includes a positive current collector and an active substance layer, the active substance layer is applied on at least one surface of the positive current collector, and a cathode material in the active substance layer includes the above high-nickel ternary cathode material or the high-nickel ternary cathode material prepared by the above preparation method.

Another embodiment of the present application further provides a secondary battery, including the above positive plate. The above secondary battery may include, for example, the above positive plate, a negative plate, an electrolyte solution, and a separator. The separator is provided between the positive plate and the negative plate, mainly functions to prevent a short circuit of a positive electrode and a negative electrode, and meanwhile may allow ions to pass. The electrolyte solution functions to conduct the ions between the positive plate and the negative plate. During charging and discharging processes of the secondary battery, lithium ions are inserted and extracted back and forth between the positive plate and the negative plate. The present application has no special limitation on the negative plate, the electrolyte solution, and the separator, and the negative plate prepared by a preparation method commonly used in the technical field and the electrolyte solution and the separator commonly used in the art can be used.

Another embodiment of the present application further provides an electric device, including the above secondary battery. The electric device may include any apparatus or device with a secondary battery as a driving source, such as a mobile phone, a notebook computer, an electric vehicle, a ship, a satellite, an energy storage apparatus, an intelligent household appliance, or the like, but is not limited thereto.

In order to further illustrate the present application, the technical solution of the present application is described in detail below in conjunction with specific examples and comparative examples.

### Example 1

In the example, the additives were Al₂O₃ and B₂O₃, the lithium source was LiOH·H₂O, and the precursor containing the nickel element, the cobalt element, and the manganese element was Ni_{0.83}Co_{0.06}Mn_{0.11}(OH)₂.

The preparation method for a high-nickel ternary cathode material in the example included the following steps:
(1) weighing Ni_{0.83}Co_{0.06}Mn_{0.11}(OH)₂, LiOH·H₂O, Al₂O₃, and B₂O₃ in a molar ratio of 1:1.04:0.005:0.01, mixing the four compounds in an airflow mixer at a rotation speed of 850rpm/min for 40min to obtain a mixed material after full mixing; and
(2) transferring the mixed material into an atmosphere furnace to carry out high-temperature sintering in a sintering atmosphere, firstly heating up to 550°C at a heat-up rate of 2.5°C/min for roasting for 5.5h, and then heating up to 760°C at a heat-up rate of 2.5°C/min for roasting for 13.5h, with an oxygen content in the sintering atmosphere being 99vol%; cooling along with the furnace, and sequentially carrying out roller crushing, ultra-centrifugal grinding and crushing, and 325-mesh sieving on the obtained material to obtain the high-nickel ternary cathode material LiNi_{0.83}Co_{0.05}Mn_{0.11}Al_{0.01}B_{0.02}O₂.

### Example 2

In the example, the additives were Al₂O₃ and B₂O₃, the lithium source was LiOH·H₂O, and the precursor containing the nickel element, the cobalt element, and the manganese element was Ni_{0.83}Co_{0.06}Mn_{0.11}(OH)₂.

The preparation method for a high-nickel ternary cathode material in the example included steps of:
(1) weighing Ni_{0.83}Co_{0.06}Mn_{0.11}(OH)₂, LiOH·H₂O, Al₂O₃, and B₂O₃ in a molar ratio of 1:1.04:0.005:0.005, mixing the four compounds in an airflow mixer at a rotation speed of 850rpm/min for 40min to obtain a mixed material after full mixing; and
(2) transferring the mixed material into an atmosphere furnace to carry out high-temperature sintering in a sintering atmosphere, firstly heating up to 550°C at a heat-up rate of 2.5°C/min for roasting for 5.5h, and then heating up to 760°C at a heat-up rate of 2.5°C/min for roasting for 13.5h, with an oxygen content in the sintering atmosphere being 99vol%; cooling along with the furnace, and sequentially carrying out roller crushing, ultra-centrifugal grinding and crushing, and 325-mesh sieving on the obtained material to obtain the high-nickel ternary cathode material LiNi_{0.83}Co_{0.05}Mn_{0.11}Al_{0.01}B_{0.01}O₂.

### Example 3

In the example, the additives were Al(OH)₃ and B₂O₃, the lithium source was LiOH·H₂O, and the precursor containing the nickel element, the cobalt element, and the manganese element was Ni_{0.83}Co_{0.06}Mn_{0.11}(OH)₂.

The preparation method for a high-nickel ternary cathode material in the example included steps of:
(1) weighing Ni_{0.83}Co_{0.06}Mn_{0.11}(OH)₂, LiOH·H₂O, Al(OH)₃, and B₂O₃ in a molar ratio of 1:1.04:0.01:0.005, mixing the four compounds in an airflow mixer at a rotation speed of 850rpm/min for 40min to obtain a mixed material after full mixing; and
(2) transferring the mixed material into an atmosphere furnace to carry out high-temperature sintering in a sintering atmosphere, firstly heating up to 550°C at a heat-up rate of 2.5°C/min for roasting for 5.5h, and then heating up to 770°C at a heat-up rate of 2.5°C/min for roasting for 13.5h, with an oxygen content in the sintering atmosphere being 99vol%; cooling along with the furnace, and sequentially carrying out roller crushing, ultra-centrifugal grinding and crushing, and 325-mesh sieving on the obtained material to obtain the high-nickel ternary cathode material LiNi_{0.83}Co_{0.05}Mn_{0.11}Al_{0.01}B_{0.01}O₂.

### Example 4

In the example, the additives were Al₂O₃ and SiO, the lithium source was LiOH·H₂O, and the precursor containing the nickel element, the cobalt element and the manganese element was Ni_{0.83}Co_{0.06}Mn_{0.11}(OH)₂.

The preparation method for a high-nickel ternary cathode material in the example included steps of:
(1) weighing Ni_{0.83}Co_{0.06}Mn_{0.11}(OH)₂, LiOH·H₂O, Al₂O₃, and SiO in a molar ratio of 1:1.04:0.005:0.01, mixing the four compounds in an airflow mixer at a rotation speed of 850rpm/min for 40min to obtain a mixed material after full mixing; and
(2) transferring the mixed material into an atmosphere furnace to carry out high-temperature sintering in a sintering atmosphere, firstly heating up to 550°C at a heat-up rate of 2.5°C/min for roasting for 5.5h, and then heating up to 770°C at a heat-up rate of 2.5°C/min for roasting for 13.5h, with an oxygen content in the sintering atmosphere being 99vol%; cooling along with the furnace, and sequentially carrying out roller crushing, ultra-centrifugal grinding and crushing, and 325-mesh sieving on the obtained material to obtain the high-nickel ternary cathode material LiNi_{0.83}Co_{0.05}Mn_{0.11}Al_{0.01}Si_{0.01}O₂.

### Example 5

In the example, the additives were In₂O₃ and B₂O₃, the lithium source was LiOH·H₂O, and the precursor containing the nickel element, the cobalt element and the manganese element was Ni_{0.83}Co_{0.06}Mn_{0.11}(OH)₂.

The preparation method for a high-nickel ternary cathode material in the example included steps of:
(1) weighing Ni_{0.83}Co_{0.06}Mn_{0.11}(OH)₂, LiOH-H₂O, In₂O₃, and B₂O₃ in a molar ratio of 1:1.04:0.005:0.005, mixing the four compounds in an airflow mixer at a rotation speed of 850rpm/min for 40min to obtain a mixed material after full mixing; and
(2) transferring the mixed material into an atmosphere furnace to carry out high-temperature sintering in a sintering atmosphere, firstly heating up to 550°C at a heat-up rate of 2.5°C/min for roasting for 5.5h, and then heating up to 770°C at a heat-up rate of 2.5°C/min for roasting for 13.5h, with an oxygen content in the sintering atmosphere being 99vol%; cooling along with the furnace, and sequentially carrying out roller crushing, ultra-centrifugal grinding and crushing, and 325-mesh sieving on the obtained material to obtain the high-nickel ternary cathode material LiNi_{0.83}Co_{0.05}Mn_{0.11}In_{0.01}B_{0.01}O₂.

### Example 6

In the example, the additives were In₂O₃ and SiO, the lithium source was LiOH·H₂O, and the precursor containing the nickel element, the cobalt element, and the manganese element was Ni_{0.83}Co_{0.06}Mn_{0.11}(OH)₂.

The preparation method for a high-nickel ternary cathode material in the example included steps of:
(1) weighing Ni_{0.83}Co_{0.06}Mn_{0.11}(OH)₂, LiOH·H₂O, In₂O₃, and SiO in a molar ratio of 1:1.04:0.005:0.01, mixing the four compounds in an airflow mixer at a rotation speed of 850rpm/min for 40min to obtain a mixed material after full mixing; and
(2) transferring the mixed material into an atmosphere furnace to carry out high-temperature sintering in a sintering atmosphere, firstly heating up to 550°C at a heat-up rate of 2.5°C/min for roasting for 5.5h, and then heating up to 760°C at a heat-up rate of 2.5°C/min for roasting for 13.5h, with an oxygen content in the sintering atmosphere being 99vol%; cooling along with the furnace, and sequentially carrying out roller crushing, ultra-centrifugal grinding and crushing, and 325-mesh sieving on the obtained material to obtain the high-nickel ternary cathode material LiNi_{0.83}Co_{0.05}Mn_{0.11}In_{0.01}Si_{0.01}O₂.

### Comparative Example 1 (undoped)

In the comparative example, the lithium source was LiOH·H₂O, and the precursor containing the nickel element, the cobalt element, and the manganese element was Ni_{0.83}Co_{0.06}Mn_{0.11}(OH)₂.

The preparation method for a high-nickel ternary cathode material in the comparative example included steps of:
(1) weighing Ni_{0.83}Co_{0.06}Mn_{0.11}(OH)₂ and LiOH·H₂O in a molar ratio of 1:1.04, mixing the two compounds in an airflow mixer at a rotation speed of 850rpm/min for 40min to obtain a mixed material after full mixing; and
(2) transferring the mixed material into an atmosphere furnace to carry out high-temperature sintering in a sintering atmosphere, firstly heating up to 550°C at a heat-up rate of 2.5°C/min for roasting for 5.5h, and then heating up to 760°C at a heat-up rate of 2.5°C/min for roasting for 13.5h, with an oxygen content in the sintering atmosphere being 99vol%; cooling along with the furnace, and sequentially carrying out roller crushing, ultra-centrifugal grinding and crushing, and 325-mesh sieving on the obtained material to obtain the high-nickel ternary cathode material LiNi_{0.83}Co_{0.06}Mn_{0.11}O₂.

### Comparative Example 2 (only element Al is doped)

In the comparative example, the additive was Al₂O₃, the lithium source was LiOH·H₂O, and the precursor containing the nickel element, the cobalt element, and the manganese element was Ni_{0.83}Co_{0.06}Mn_{0.11}(OH)₂.

The preparation method for a high-nickel ternary cathode material in the comparative example included the following steps:
(1) weighing Ni_{0.83}Co_{0.06}Mn_{0.11}(OH)₂, LiOH.H₂O and Al₂O₃ in a molar ratio of 1:1.04:0.005, mixing the three compounds in an airflow mixer at a rotation speed of 850rpm/min for 40min to obtain a mixed material after full mixing; and
(2) transferring the mixed material into an atmosphere furnace to carry out high-temperature sintering in a sintering atmosphere, firstly heating up to 550°C at a heat-up rate of 2.5°C/min for roasting for 5.5h, and then heating up to 760°C at a heat-up rate of 2.5°C/min for roasting for 13.5h, with an oxygen content in the sintering atmosphere being 99vol%; cooling along with the furnace, and sequentially carrying out roller crushing, ultra-centrifugal grinding and crushing, and 325-mesh sieving on the obtained material to obtain the high-nickel ternary cathode material LiNi_{0.83}Co_{0.05}Mn_{0.11}Al_{0.01}O₂.

### Comparative Example 3 (only element B is doped)

In the comparative example, the additive was B₂O₃, the lithium source was LiOH·H₂O, and the precursor containing the nickel element, the cobalt element, and the manganese element was Ni_{0.83}Co_{0.06}Mn_{0.11}(OH)₂.

The preparation method for a high-nickel ternary cathode material in the comparative example included steps of:
(1) weighing Ni_{0.83}Co_{0.06}Mn_{0.11}(OH)₂, LiOH.H₂O and B₂O₃ in a molar ratio of 1 :1.04:0.01, mixing the three compounds in an airflow mixer at a rotation speed of 850rpm/min for 40min to obtain a mixed material after full mixing; and
(2) transferring the mixed material into an atmosphere furnace to carry out high-temperature sintering in a sintering atmosphere, firstly heating up to 550°C at a heat-up rate of 2.5°C/min for roasting for 5.5h, and then heating up to 760°C at a heat-up rate of 2.5°C/min for roasting for 13.5h, with an oxygen content in the sintering atmosphere being 99vol%; cooling along with the furnace, and sequentially carrying out roller crushing, ultra-centrifugal grinding and crushing, and 325-mesh sieving on the obtained material to obtain the high-nickel ternary cathode material LiNi_{0.83}Co_{0.06}Mn_{0.11}B_{0.02}O₂.

### Comparative Example 4 (only element In is doped)

In the comparative example, the additive was In₂O₃, the lithium source was LiOH·H₂O, and the precursor containing the nickel element, the cobalt element and the manganese element was Ni_{0.83}Co_{0.06}Mn_{0.11}(OH)₂.

The preparation method for a high-nickel ternary cathode material in the comparative example included steps of:
(1) weighing Ni_{0.83}Co_{0.06}Mn_{0.11}(OH)₂, LiOH.H₂O and In₂O₃ in a molar ratio of 1:1.04:0.005, mixing the three compounds in an airflow mixer at a rotation speed of 850rpm/min for 40min to obtain a mixed material after full mixing; and
(2) transferring the mixed material into an atmosphere furnace to carry out high-temperature sintering in a sintering atmosphere, firstly heating up to 550°C at a heat-up rate of 2.5°C/min for roasting for 5.5h, and then heating up to 760°C at a heat-up rate of 2.5°C/min for roasting for 13.5h, with an oxygen content in the sintering atmosphere being 99vol%; cooling along with the furnace, and sequentially carrying out roller crushing, ultra-centrifugal grinding and crushing, and 325-mesh sieving on the obtained material to obtain the high-nickel ternary cathode material LiNi_{0.83}Co_{0.05}Mn_{0.11}In_{0.01}O₂.

### Comparative Example 5 (only element Si is doped)

In the comparative example, the additive was SiO, the lithium source was LiOH·H₂O, and the precursor containing the nickel element, the cobalt element, and the manganese element was Ni_{0.83}Co_{0.06}Mn_{0.11}(OH)₂.

The preparation method for a high-nickel ternary cathode material in the comparative example included steps of:
(1) weighing Ni_{0.83}Co_{0.06}Mn_{0.11}(OH)₂, LiOH.H₂O and SiO in a molar ratio of 1 :1.04:0.01, mixing the three compounds in an airflow mixer at a rotation speed of 850rpm/min for 40min to obtain a mixed material after full mixing; and
(2) transferring the mixed material into an atmosphere furnace to carry out high-temperature sintering in a sintering atmosphere, firstly heating up to 550°C at a heat-up rate of 2.5°C/min for roasting for 5.5h, and then heating up to 760°C at a heat-up rate of 2.5°C/min for roasting for 13.5h, with an oxygen content in the sintering atmosphere being 99vol%; cooling along with the furnace, and sequentially carrying out roller crushing, ultra-centrifugal grinding and crushing, and 325-mesh sieving on the obtained material to obtain the high-nickel ternary cathode material LiNi_{0.83}Co_{0.06}Mn_{0.11}Si_{0.01}O₂.

### ICP, SEM, XRD, specific surface area, and residual alkali content test

The components of the high-nickel ternary cathode materials prepared in each example and each comparative example were measured by an ICP-AES analyzer.

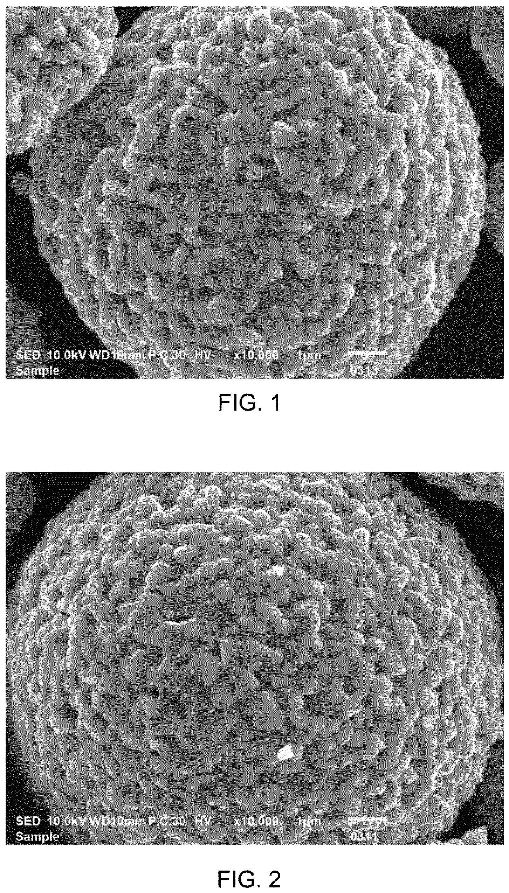

SEM characterization was performed on the high-nickel ternary cathode material prepared in example 1 and the high-nickel ternary cathode material prepared in comparative example 1. Herein, FIG. 1 was an SEM image of the high-nickel ternary cathode material LiNi_{0.83}Co_{0.05}Mn_{0.11}Al_{0.01}B_{0.02}O₂ prepared in example 1 at a magnification of 10,000, and FIG. 2 was an SEM image of the high-nickel ternary cathode material LiNi_{0.83}Co_{0.06}Mn_{0.11}O₂ prepared in comparative example 1 at a magnification of 10,000.

As could be seen from FIGS. 1 and 2, each of the high-nickel ternary cathode materials prepared in example 1 and comparative example 1 was composed of secondary microspheres assembled from primary nanoparticles, and had an average size of about 10µm; furthermore, as could be seen from a comparison between FIG. 1 and FIG. 2, a surface granular sensation of the primary particles of the high-nickel ternary cathode material prepared in example 1 was stronger, and surfaces of the primary particles of the high-nickel ternary cathode material prepared in comparative example 1 were smoother, which was mainly because the element B could not replace or occupy the gap position in the bulk lattice during the competitive doping process to be enriched on the surface.

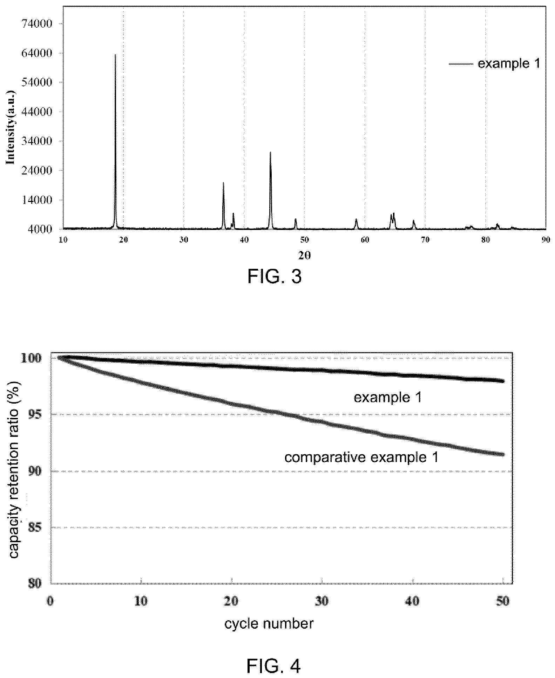

FIG. 3 was an XRD graph of the high-nickel ternary cathode material LiNi_{0.83}Co_{0.05}Mn_{0.11}Al_{0.01}B_{0.02}O₂ prepared in example 1. As could be seen from FIG. 3, the high-nickel ternary cathode material prepared in example 1 had a layered structure and had an α-NaFeO₂ rhombus structure of an R-3m space group. LiNi_{0.83}Co_{0.05}Mn_{0.11}Al_{0.01}B_{0.02}O₂ after co-doping of the element Al and the element B had high crystallinity and had no redundant impurity peak; furthermore, a diffraction peak of LiNi_{0.83}Co_{0.05}Mn_{0.11}Al_{0.01}B_{0.02}O₂ had a peak intensity (003)/(104) greater than 1.2, which indicated that a Li/Ni hybrid arrangement was weak.

Tests of the specific surface area and the residual alkali content were performed on the high-nickel ternary cathode materials prepared in examples 1 to 6 and comparative examples 1 to 5, and results were shown in table 1.

Testing methods of the specific surface area and the residual alkali content were as follows:
1. specific surface area testing method: performing measurement by a specific surface tester according to GB/T19587-2017;
2. residual alkali content testing method: mixing the prepared high-nickel ternary cathode material with deionized water in a mass ratio of 5:100, stirring the mixture for 5min at a rotation speed of 200rpm/min to 400rpm/min, performing suction filtration for all by a vacuum suction filtration pump, and then carrying out equivalent point titration by using 0.1M hydrochloric acid solutions to obtain contents of residual LiOH and residual Li₂CO₃ on the surface of the high-nickel ternary cathode material.

### Electrochemical performance test

The high-nickel ternary cathode materials prepared in examples 1 to 6 and comparative examples 1 to 5 were used as active substances, a conductive agent was SP, a binder was PVDF, a solvent was NMP, and the active substances, the conductive agent, and the binder were uniformly mixed according to a mass ratio of 96.5:1.5:2 into slurry, the slurry was applied on aluminum foil, then was cut into positive plate wafers after dried, and is assembled into a button battery in a glove box, where an electrolyte solution was formed by dissolving 1M LiPF₆ in a mixed solution of ethylene carbonate (EC), diethyl carbonate (DEC), and dimethyl carbonate (DMC) (a volume ratio was 1:1:1), the assembled button battery stood for 12h for an electrochemical performance test, and results were shown in table 1 and FIG. 4.

Testing conditions of specific discharge capacity: the button battery assembled in each example and each comparative example were subjected to a constant-current charge and discharge test by a battery test system (CT2001A, LAND), a first battery capacity test temperature was a room temperature of 25°C, a current was 0.1C (a current density was set as 1C=200mAg⁻¹), and a voltage range was 2.8V to 4.25V (vs. Li/Li⁺).

Testing conditions of high-temperature cycle performance: 50 cycles were performed on the button battery assembled in each example and each comparative example at 45°C and a current density of 0.3C.

**Table 1**

| Category | Specific surface area (m²/g) | Mass percent content of Li₂CO₃ (wt%) | Mass percent content of LiOH (wt%) | First discharge specific capacity (mAhg⁻¹) | Capacity retention ratio after 50 cycles at 45°C and 0.3C |
|---|---|---|---|---|---|
| Example 1 | 0.608 | 0.0560 | 0.3237 | 207.3 | 97.91 |
| Example 2 | 0.617 | 0.0603 | 0.3354 | 206.8 | 96.78 |
| Example 3 | 0.543 | 0.0723 | 0.3218 | 206.3 | 96.23 |
| Example 4 | 0.611 | 0.0598 | 0.3309 | 208.1 | 97.18 |
| Example 5 | 0.607 | 0.0612 | 0.3102 | 206.4 | 96.46 |
| Example 6 | 0.598 | 0.0734 | 0.3253 | 206.9 | 95.89 |
| Comparative example 1 | 0.687 | 0.0680 | 0.3068 | 203.4 | 91.42 |
| Comparative example 2 | 0.676 | 0.0725 | 0.3294 | 204.2 | 92.67 |
| Comparative example 3 | 0.652 | 0.0876 | 0.3017 | 206.8 | 94.23 |
| Comparative example 4 | 0.647 | 0.0783 | 0.2987 | 206.1 | 93.09 |
| Comparative example 5 | 0.616 | 0.0564 | 0.3128 | 207.0 | 92.21 |

As could be seen from table 1 and FIG. 4, the capacity retention ratios of the button batteries of example 1 and comparative example 1 after 50 cycles at 45°C and the current density of 0.3C were 97.91% and 91.42% respectively. Compared with the high-nickel ternary cathode material in comparative example 1, the high-nickel ternary cathode material in example 1 was subjected to competitive co-doping of the element Al and the element B, and the cycle stability in example 1 was remarkably improved, which was mainly because uniform bulk distribution of the element Al and surface enrichment of the element B could synergistically improve the crystal structure and the surface chemical structure of the high-nickel ternary cathode material. Compared with examples 1 to 6, the high-nickel ternary cathode materials prepared in comparative examples 2 to 5 were only doped with the element X or the element Y, and the button batteries of comparative examples 2 to 5 had a poorer high-temperature cycle performance at 45°C and 0.3C than those in examples 1 to 6, which indicated that the cycle performance and the thermal stability of the high-nickel cathode materials in examples 1 to 6 were obviously improved by co-doping the element X and the element Y.

In conclusion, the high-nickel ternary cathode material is doped with the element X and the element Y to generate the competitive layered doping effect, and the competitive layered doping allows the element X to be subjected to uniform bulk doping and the element Y to be enriched on the surface of the material in the co-doping process of the element X and the element Y. The uniform bulk lattice doping of the element X can effectively reduce sudden shrinkage of lattice parameters in a c direction and collapse of lithium atom layer spacing when charging is finished, thereby reducing the lattice collapse of anisotropy of the layered structure in the c direction. The element Y layer enriched on the surface assists in forming a stable surface/interface layer during cycling, thus inhibiting surface reconstruction during cycling. Therefore, the crystal structure and the surface chemical structure can be synergistically improved through competitive layered doping, the cycle stability of the high-nickel ternary cathode material is remarkably improved, and the problems of serious capacity and voltage attenuation, or the like, of the high-nickel ternary cathode material in the cycle process are effectively solved.

The technical features of the above embodiments can be combined arbitrarily, and all possible combinations of the technical features of the embodiments described above may not be described for the sake of brevity, but should be considered to be within the scope of the present application as long as there is no contradiction between the combinations of the technical features.

The above-mentioned embodiments only express several implementations of the present application, and the description thereof is specific and detailed, but not to be construed as limiting the scope of the application. It should be noted that various changes and improvements can be made by those skilled in the art without departing from the concept of the present application, and these changes and improvements are all within the protection scope of the present application. Therefore, the protection scope of the present application should be subject to the appended claims, and the description and drawings can be used to explain the contents of the claims.

## Claims

1. A high-nickel ternary cathode material, **characterized by** comprising a material with a chemical formula of LiNiₓCo_{y}Mn_{z}XₐY_{b}O₂, wherein 0.8≤x<0.96, y>0, z>0, 0.001≤a≤0.05, 0.001≤b≤0.05, x+y+z+a=1, X and Y are doping elements, X comprises one or more of Al and In, and Y comprises one or more of B and Si.

2. The high-nickel ternary cathode material according to claim 1, wherein the doping element X is distributed in bulk lattice of the material with the chemical formula of LiNiₓCo_{y}Mn_{z}XₐY_{b}O₂, and the doping element Y is enriched at a surface of the material with the chemical formula of LiNiₓCo_{y}Mn_{z}XₐY_{b}O₂.

3. A preparation method for the high-nickel ternary cathode material according to claim 1 or 2, **characterized by** comprising:
mixing an additive, a lithium source, and a precursor containing a nickel element, a cobalt element, and a manganese element, so as to obtain a mixed material, wherein the additive contains a doping element X and a doping element Y; and
performing a sintering process on the mixed material.

4. The preparation method according to claim 3, wherein the precursor containing the nickel element, the cobalt element, and the manganese element comprises a material with a chemical formula of NiₘCoₙMn₁₋ₘ₋ₙ(OH)₂, where 0.8 ≤m<0.96, n>0, and m+n<1 ;
optionally, the additive comprises one or more of oxide, carbonate, hydroxide, and acetate of the doping element X and the doping element Y; and
optionally, the lithium source comprises one or more of lithium hydroxide, lithium carbonate, lithium acetate, and lithium nitrate.

5. The preparation method according to claim 4, wherein a lithium element in the lithium source and the precursor containing the nickel element, the cobalt element, and the manganese element have a molar ratio of (1.01-1.06):1.

6. The preparation method according to any one of claims 3 to 5, wherein an amount of substance of the doping element X is 0.1% to 0.6% of a total amount of substance of the additive, the lithium source, and the precursor containing the nickel element, the cobalt element, and the manganese element in the mixed material; and
an amount of substance of the doping element Y is 0.4% to 1% of the total amount of substance of the additive, the lithium source, and the precursor containing the nickel element, the cobalt element, and the manganese element in the mixed material.

7. The preparation method according to any one of claims 3 to 5, wherein the sintering process comprises steps of: placing the mixed material in an oxygen-containing sintering atmosphere, and sintering for 2h to 10h at 450°C to 600°C, and then sintering for 10h to 20h at 650°C to 900°C; and
optionally, volume percentage of oxygen in the oxygen-containing sintering atmosphere is greater than or equal to 97%.

8. A positive plate, **characterized by** comprising the high-nickel ternary cathode material according to claim 1 or 2 or the high-nickel ternary cathode material prepared by the preparation method according to any one of claims 3 to 7.

9. A secondary battery, **characterized by** comprising the positive plate according to claim 8.

10. An electric device, **characterized by** comprising the secondary battery according to claim 9.
